# EUROPÄISCHE PATENTANMELDUNG

(11) **EP 4 570 466 A1**
(43) Veröffentlichungstag der Anmeldung: **18.06.2025**
(21) Anmeldenummer: 23217124.9
(22) Anmeldetag: 15.12.2023
(51) Int. Cl.: B29C 45/16

(54) **ABDECKSCHEIBE, SPRITZGUSSVERFAHREN, SPRITZGUSSWERKZEUG, KRAFTFAHRZEUGLEUCHTE UND KRAFTFAHRZEUG**

(71) Anmelder: ZKW Group GmbH, 3250 Wieselburg (AT)
(72) Erfinder: Frühauf, Johannes, 3293 Lunz am See (AT); Aichinger, Jürgen, 3370 Ybbs an der Donau (AT)
(74) Vertreter: Patentanwaltskanzlei Matschnig & Forsthuber OG

(57) **Zusammenfassung**

Abdeckscheibe (1), für eine Kraftfahrzeugleuchte, wobei die Abdeckscheibe (1) eine Innenfläche (2), eine der Innenfläche (2) gegenüberliegende Außenfläche (3), einen transparenten Körper (4), einen opaken Körper (5) und eine Beschichtung (6) aufweist, wobei die Beschichtung (6) PU Polyurethan aufweist, wobei der transparente Körper (4), der opake Körper (5) sowie die Beschichtung (6) derart einstückig zusammenhängend, bevorzugt in einem Spritzgussverfahren hergestellt, sind, dass die Außenfläche (3) ausschließlich an der Beschichtung (6) und am opaken Körper (5) gebildet ist, wobei die Beschichtung (6) gesehen von der Außenfläche (3) in Richtung Innenfläche (2) den transparenten Körper (4) zur Gänze und den opaken Körper (5) lediglich teilweise bedeckt. Spritzgussverfahren und Spritzgusswerkzeug (100) zur Erzeugung einer Abdeckscheibe (1).

## Beschreibung

Die Erfindung betrifft eine Abdeckscheibe für eine Kraftfahrzeugleuchte, wobei die Abdeckscheibe, eine Innenfläche, eine der Innenfläche gegenüberliegende Außenfläche, einen transparenten Körper, einen opaken Körper und eine Beschichtung aufweist, wobei die Beschichtung PU Polyurethan aufweist.

Eine solche Abdeckscheibe kann mit einem Gehäuse verbunden, beispielsweise verschraubt, verrastet oder bevorzugt zumindest verklebt werden, um mit dem Gehäuse einen geschlossenen Raum zu bilden. Derartige Abdeckscheiben sind hinreichend bekannt und müssen insbesondere bei der Verwendung in einer Kraftfahrzeugleuchte bestimmte Anforderungen erfüllen. Zum einen sollten derartige Abdeckscheiben zumindest abschnittsweise transparent für sichtbares Licht sein. Zum anderen sollten derartige Abdeckscheiben ästhetische Anforderungen erfüllen, weshalb meist ein opaker Körper und ein transparenter Körper zusammenhängend ausgeformt sind, so dass zumindest ein Teil der Abdeckscheibe klar erscheint und transparent für sichtbares Licht ist. Weiters werden Beschichtungen verwendet, um insbesondere den transparenten Bereich derartiger Abdeckscheiben zu einem bestimmten Ausmaß beständig zumindest gegenüber Kratzern, Chemikalien oder ultraviolettem Licht zu machen.

Neben Hard Coating Beschichtungen, welche in Lackform mit entsprechenden Lösungsmitteln verarbeitet werden, sind auch Beschichtungen bekannt geworden, welche Polyurethan oder kurz PU aufweisen, um derartige Abdeckscheiben zu schützen. Der Vorteil einer solchen Beschichtung aus PU Polyurethan ist insbesondere das mögliche Einbinden des Beschichtungsprozesses in eine vollautomatisierte Spritzgussfertigung, wie es beispielsweise in der EP3878620A1 beschrieben wird.

Da eine derartige Beschichtung, welche PU Polyurethan aufweist, in zu verarbeitender Form aufgrund der geringen Viskosität in einem vollautomatisierten Spritzgussprozess nur über eine luftdichte Kavität eingebracht werden kann, sind im Spritzgusswerkzeug Überlaufkavitäten notwendig, um die durch das Beschichtungsmaterial verdrängte Luft der Kavität aufzunehmen. Diese Überlaufkavitäten führen zu einer Anformung an der Abdeckscheibe. Diese Anformung muss nach dem Spritzgussvorgang getrennt und an der Trennstelle aufwendig versiegelt werden. Längere Prozesszeiten und eine verminderten Oberflächenbeschaffenheit an der Trennstelle sind die Folge.

Es ist daher eine Aufgabe der Erfindung, eine Abdeckscheibe, ein Spritzgussverfahren sowie ein Spritzgusswerkzeug bereitzustellen, um die genannten Nachteile zumindest ansatzweise zu überwinden, ohne das Erscheinungsbild der Abdeckscheibe wesentlich zu beeinflussen.

Die Aufgabe wird mit der eingangs genannten Abdeckscheibe gelöst, wobei der transparente Körper, der opake Körper sowie die Beschichtung derart einstückig zusammenhängend, bevorzugt in einem Spritzgussverfahren hergestellt, sind, dass die Außenfläche ausschließlich an der Beschichtung und am opaken Körper gebildet ist, wobei die Beschichtung gesehen von der Außenfläche in Richtung Innenfläche den transparenten Körper zur Gänze und den opaken Körper lediglich teilweise bedeckt, wobei der den transparenten Körper zur Gänze bedeckende Bereich der Beschichtung einen Nutzabschnitt der Beschichtung bildet und wobei der lediglich teilweise den opaken Körper bedeckende Bereich der Beschichtung zumindest einen ersten Teilabschnitt der Beschichtung bildet, welcher erste Teilabschnitt zumindest teilweise in einer Überlaufkavität im Einspritzprozess der Beschichtung geformt ist.

Vorteilhafterweise weist der Nutzabschnitt der Beschichtung gesehen von der Außenfläche in Richtung Innenfläche eine Dicke zwischen 0,1 mm und 0,9 mm auf.

Bevorzugt weist der erste Teilabschnitt der Beschichtung eine Dicke auf, welche kleiner gleich, bevorzugt gleich der Dicke des Nutzabschnitts der Beschichtung ist.

In einer vorteilhaften Ausgestaltung bildet der lediglich teilweise den opaken Körper bedeckende Bereich der Beschichtung zusätzlich einen zweiten Teilabschnitt, welcher zweite Teilabschnitt getrennt von dem ersten Teilabschnitt in einer Angusskavität im Einspritzprozess der Beschichtung geformt ist. Dadurch entfällt das nachträgliche Trennen und Versiegeln der Angussstelle der Beschichtung.

Um eine optimale Beschaffenheit des Nutzabschnitts zu gewährleisten ist der zweite Teilabschnitt bevorzugt entlang der Außenfläche im Wesentlichen an einem gegenüberliegenden Bereich der Beschichtung gebildet.

Bevorzugt weist der opake Körper ein Material auf, welches zumindest gegenüber einem äußeren Einfluss, gewählt aus einer Gruppe von äußeren Einflüssen, welche Gruppe Einflüsse durch widrige Witterungsverhältnisse, mechanische Einflüsse, Einflüsse durch Sonneneinstrahlung oder Einflüsse von Chemikalien umfasst, beständig ist.

Beispielsweise liegt eine Beständigkeit eines Materials gegenüber Einflüssen durch widrigen Witterungsverhältnissen vor, wenn zumindest eine Prüfung, gewählt aus einer Gruppe von Prüfungen umfassend DIN EN 60068-2-2, z.B. v2008-05; PV 1200 z.B. v2004-10; PV 3930, z.B. v2008-03; DIN EN ISO 6270-1, z.B. 2018-04 zu keinen Wesentlichen sichtbaren Veränderungen, wie Farbveränderungen, Glanzverlust, Sprünge oder Blasen führt.

Beispielsweise besitzt ein Material eine Beständigkeit gegenüber mechanischen Einwirkungen bzw. Einflüssen wie Steinschlag, wenn die Prüfung gemäß der DIN EN ISO 20567-1, z.B. v2017-07 einen Kennwert kleiner gleich 3, bevorzugt kleiner gleich 2 ergibt. Alternativ oder zusätzlich kann eine Beständigkeit des Materials gegenüber mechanischen Einwirkungen bzw. /Einflüssen, wie sie bei einer Waschanlage vorkommen, vorliegen, wenn ein bestimmter Trübungsgrad, wie er beispielsweise in der DIN EN ISO 13803, z.B. v2015-02 definiert ist, kleiner oder gleich dem Trübungsgrad eines Referenzmaterials nach einer Prüfung gemäß der DIN EN ISO 20566, z.B. v2021-06 ist. Ein solches Referenzmaterial ist beispielsweise das Beschichtungsmaterial UVKC3000k.

Beispielsweise liegt eine Beständigkeit gegenüber einem Einfluss von Sonneneinstrahlung und der damit verbundenen UV Belastung vor, wenn das Material nach einer Prüfung, beispielsweise gemäß der PV 3930, z.B. v2022-04, keine Wesentlichen sichtbaren Veränderungen, wie Farbveränderungen, Glanzverlust, Sprünge oder Blasen aufweist.

Beispielsweise liegt eine Beständigkeit gegenüber einem Einfluss von Chemikalien vor, wenn ein Material nach einer Prüfung gemäß ISO 16750-5, z.B. v2010-04, keine Wesentlichen sichtbaren Veränderungen, wie Farbveränderungen, Glanzverlust, Sprünge oder Blasen aufweist. Die in der Prüfung vorgesehenen chemischen Stoffe können von der "Mounting location" des Materials abhängig sein. Im zweckmäßigen Einsatz können jene chemischen Stoffe tragend werden, welche der "Mounting location" [D] entsprechen, also "Mounting on exterior".

Sollte in den oben genannten Prüfnormen eine bestimmte Anzahl an Testzyklen festlegbar sein, so ist zumindest ein einzelner Testzyklus durchzuführen, um anschließend die Beständigkeit des zu prüfenden Materials gegenüber den genannten äußeren Einflüssen zu beurteilen.

Weiters wird die Aufgabe der Erfindung mit einem Spritzgussverfahren zur Erzeugung einer Abdeckscheibe für eine Kraftfahrzeugleuchte gelöst, wobei das Spritzgussverfahren folgende Schritte umfasst:
- Bereitstellen eines Spritzgusswerkzeuges zur Formung einer ersten Kavität,
- Spritzgießen eines transparenten Körpers in der ersten Kavität,
- Bereitstellen eines Spritzgusswerkezeuges zur Formung einer zweiten Kavität,
- Spritzgießen eines opaken Körpers in der zweiten Kavität,
   wobei entweder die erste Kavität derart teilweise durch den opaken Körper begrenzt wird oder die zweite Kavität derart teilweise durch den transparenten Körper begrenzt wird, dass der transparente Körper und der opake Körper während des Spritzgießens miteinander einstückig zusammenhängend verbunden werden,
- Bereitstellen eines Spritzgusswerkzeuges zur Formung einer Flutkavität, welche Flutkavität teilweise von dem transparenten Körper und teilweise von dem opaken Körper begrenzt wird,
   wobei der opake Körper teilweise zumindest eine Überlaufkavität begrenzt, welche zumindest eine Überlaufkavität Teil der Flutkavität ist,
- Spritzgießen einer Beschichtung in der Flutkavität durch Einspritzen eines Beschichtungsmaterials in die Flutkavität, wobei das Beschichtungsmaterial PU Polyurethan enthält,
   wobei während des Einspritzprozesses in die Flutkavität Luft, welche sich in der Flutkavität befindet, von dem Beschichtungsmaterial in die zumindest eine Überlaufkavität verdrängt wird,
   - Entformen der Abdeckscheibe.

Vorteilhafterweise kann vorgesehen sein, dass während des Spritzgießens des Beschichtungsmaterials in die Flutkavität die Flutkavität entgegen der Schwerkraft mit dem Beschichtungsmaterial gefüllt wird.

Mit Vorteil ist vorgesehen dass der opake Körper aus einem Material spritzgegossen wird bzw. ein Material aufweist, welches zumindest gegenüber einem äußeren Einfluss, gewählt aus einer Gruppe von äußeren Einflüssen, welche Gruppe Einflüsse durch widrige Witterungsverhältnisse, mechanische Einflüsse, Einflüsse durch Sonneneinstrahlung oder Einflüsse von Chemikalien umfasst, beständig ist.

Weiters wird die Aufgabe der Erfindung mit einem Spritzgusswerkezug zur Erzeugung einer Abdeckscheibe für eine Kraftfahrzeugleuchte gelöst, wobei das Spritzgusswerkzeug eine erste Werkzeughälfte und eine zweite Werkzeughälfte aufweist,
wobei die erste Werkzeughälfte dazu eingerichtet ist, einen spritzgegossenen Abdeckscheibenrohling aufzunehmen, welcher Abdeckscheibenrohling einen transparenten Körper und einen damit einstückig zusammenhängenden opaken Körper aufweist,
wobei zwischen der ersten Werkzeughälfte und der zweiten Werkzeughälfte in geschlossener Form eine Flutkavität formbar ist, welche Flutkavität teilweise von der zweiten Werkzeughälfte, teilweise von dem transparenten Körper und teilweise von dem opaken Körper, des von der ersten Werkzeughälfte aufnehmbaren Abdeckscheibenrohlings, begrenzt ist,
wobei die Flutkavität zumindest eine Überlaufkavität aufweist, welche Überlaufkavität dazu eingerichtet ist, in der Flutkavität befindliche Luft aufzunehmen, wenn diese durch Einspritzen von Beschichtungsmaterial in die Flutkavität verdrängt wird,
wobei die zumindest eine Überlaufkavität im Wesentlichen teilweise von der zweiten Werkzeughälfte und teilweise von dem opaken Körper, des von der ersten Werkzeughälfte aufnehmbaren Abdeckscheibenrohlings, begrenzt ist.

Mit Vorteil kann vorgesehen sein, dass die zumindest eine Überlaufkavität in geschlossener Form der Werkzeughälften entgegen eines Strömungspfades des Beschichtungsmaterials beim Einspritzen und bezogen auf einen Angusspunkt des Beschichtungsmaterials, von welchem der Strömungspfad ausgeht, im Wesentlichen an der am weitest entferntesten Stelle angeordnet ist.

Die Erfindung betrifft weiters eine Kraftfahrzeugleuchte mit einer genannten Abdeckscheibe oder mit einer durch das genannte Spritzgussverfahren erzeugten Abdeckscheibe.

Weiters betrifft die Erfindung ein Kraftfahrzeug mit einer solchen Kraftfahrzeugleuchte.

Die Erfindung ist im Folgenden anhand beispielhafter und nicht einschränkender Figuren veranschaulicht. Darin zeigt
Fig. 1 eine Vorderansicht einer Abdeckscheibe,
Fig. 2 eine Schnittdarstellung der Abdeckscheibe,
Fig. 3a bis Fig. 3d schematisch einzelne Schritte eines Spritzgussverfahrens,
Fig. 4 eine Schnittdarstellung einer Kraftfahrzeugleuchte, und
Fig. 5 ein Kraftfahrzeug.

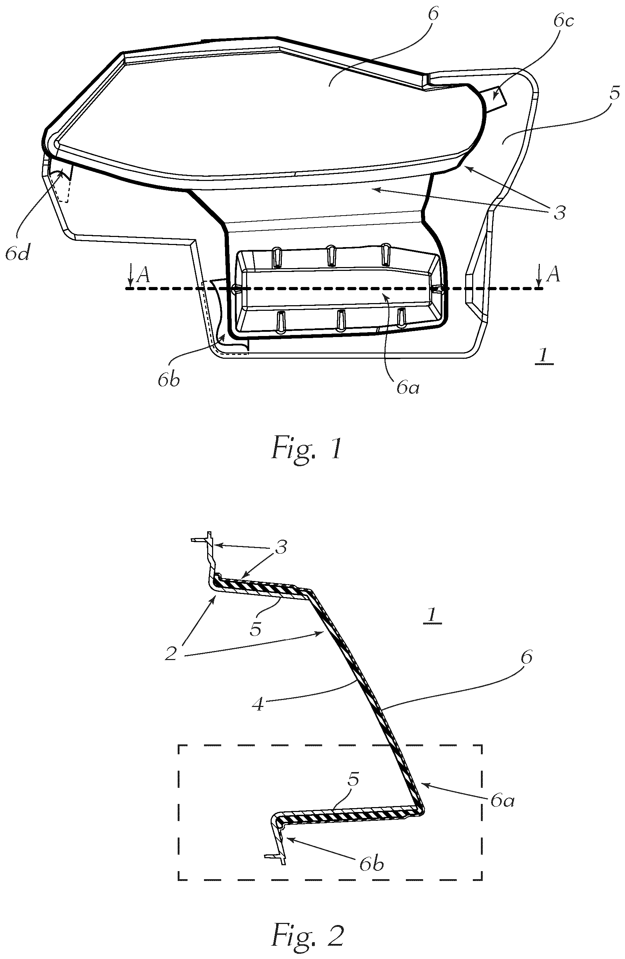

Im Folgenden wird die Erfindung wechselweise anhand der Fig. 1 und Fig. 2 genauer erklärt.

Fig. 1 zeigt eine Abdeckscheibe 1 in orthogonaler Abbildung von vorne. Die Abdeckscheibe 1 weist eine Innenfläche 2 und eine der Innenfläche 2 gegenüberliegende Außenfläche 3 auf. "Vorne" bezieht sich also auf eine Richtung, die sich von der Innenfläche 2 zur Außenfläche 3 der Abdeckscheibe 1 ergibt. In der gezeigten Darstellung ist lediglich die Außenfläche 3 der Abdeckscheibe 1 zu sehen. Als Außenfläche 3 kann jener Oberflächenteil der Abdeckscheibe 1 bezeichnet werden, welcher im verbauten Zustand bzw. im zweckmäßigen Einsatz der Abdeckscheibe 1 bestimmten äußeren Einflüssen ausgesetzt sein kann. Hingegen kann als Innenfläche 2 der Abdeckscheibe 1 jener Oberflächenteil bezeichnet werden, welcher im verbauten Zustand bzw. im zweckmäßigen Einsatz der Abdeckscheibe 1 keinen oder zumindest einer geringeren Anzahl an äußeren Einflüssen ausgesetzt ist, da dieser beispielsweise von einem Gehäuse 7 geschützt wird.

Äußere Einflüsse können insbesondere Einflüsse durch widrige Witterungsverhältnisse, Einflüsse durch mechanische Einwirkung wie Steinschlag, Eiskratzer oder dergleichen, Einflüsse durch Sonneneinstrahlung bzw. der damit verbundenen UV Belastung, sowie chemische Einflüsse wie zum Beispiel Säuren, Alkohole, Reinigungsmittel oder Öle umfassen.

Demnach muss die Abdeckscheibe 1 bzw. jener Oberflächenteil der Abdeckscheibe 1, welcher äußeren Einflüssen ausgesetzt sein kann - nämlich die Außenfläche 3, beständig gegenüber zumindest bestimmten äußeren Einflüssen sein. Die Beständigkeit kann beispielsweise anhand mehrerer Kriterien beurteilt werden.

Beispielsweise liegt eine Beständigkeit eines Materials gegenüber Einflüssen durch widrige Witterungsverhältnisse vor, wenn zumindest eine Prüfung, gewählt aus einer Gruppe von Prüfungen umfassend DIN EN 60068-2-2, z.B. v2008-05; PV 1200 z.B. v2004-10; PV 3930, z.B. v2008-03; DIN EN ISO 6270-1, z.B. 2018-04 zu keinen Wesentlichen sichtbaren Veränderungen, wie Farbveränderungen, Glanzverlust, Sprünge oder Blasen führt.

Beispielsweise besitzt ein Material eine Beständigkeit gegenüber mechanischen Einwirkungen bzw. Einflüssen wie Steinschlag, wenn die Prüfung gemäß der DIN EN ISO 20567-1, z.B. v2017-07 einen Kennwert kleiner gleich 3, bevorzugt kleiner gleich 2 ergibt. Alternativ oder zusätzlich kann eine Beständigkeit des Materials gegenüber mechanischen Einwirkungen bzw. Einflüssen, wie sie bei einer Waschanlage vorkommen, vorliegen, wenn ein bestimmter Trübungsgrad, wie er beispielsweise in der DIN EN ISO 13803, z.B. v2015-02 definiert ist, kleiner oder gleich dem Trübungsgrad eines Referenzmaterials nach einer Prüfung gemäß der DIN EN ISO 20566, z.B. v2021-06 ist. Ein solches Referenzmaterial ist beispielsweise das Beschichtungsmaterial UVKC3000k.

Beispielsweise liegt eine Beständigkeit gegenüber einem Einfluss von Sonneneinstrahlung und der damit verbundenen UV Belastung vor, wenn das Material nach einer Prüfung, beispielsweise gemäß der PV 3930, z.B. v2022-04, keine Wesentlichen sichtbaren Veränderungen, wie Farbveränderungen, Glanzverlust, Sprünge oder Blasen aufweist.

Beispielsweise liegt eine Beständigkeit gegenüber einem Einfluss von Chemikalien vor, wenn ein Material nach einer Prüfung gemäß ISO 16750-5, z.B. v2010-04, keine Wesentlichen sichtbaren Veränderungen, wie Farbveränderungen, Glanzverlust, Sprünge oder Blasen aufweist. Die in der Prüfung vorgesehenen chemischen Stoffe können von der "Mounting location" des Materials abhängig sein. Im zweckmäßigen Einsatz können jene chemischen Stoffe tragend werden, welche der "Mounting location" [D] entsprechen, also "Mounting on exterior".

Sollte in den oben genannten Prüfnormen eine bestimmte Anzahl an Testzyklen festlegbar sein, so ist zumindest ein einzelner Testzyklus durchzuführen, um anschließend die Beständigkeit des zu prüfenden Materials gegenüber den genannten äußeren Einflüssen zu beurteilen.

Auch können alternativ oder zusätzlich bestimmte Grundanforderungen abhängig vom Einsatzmarkt tragend werden. Wird die Abdeckscheibe 1 in einer Kraftfahrzeugleuchte 8 eingesetzt, so sind hinsichtlich der Beständigkeit gegenüber äußeren Einflüssen beispielsweise bestimmte ECE-, CCC- oder FMVSS-Regelungen zu beachten.

Die Abdeckscheibe 1 weist, wie in Fig. 2 zu sehen, einen transparenten Körper 4, einen opaken Körper 5 sowie eine Beschichtung 6 auf. Fig. 2 zeigt eine Schnittdarstellung entlang der A-A Linie aus Fig. 1. Der transparente Körper 4, der opake Körper 5 als auch die Beschichtung 6 bilden zwischen der Innenfläche 2 und der Außenfläche 3 einen einstückig zusammenhängenden Abdeckscheibenkörper. In anderen Worten sind der transparente Körper, der opake Körper 5 sowie die Beschichtung 6 zwischen der Innenfläche 2 und der Außenfläche 3 angeordnet, wobei die Innenfläche 2 und die Außenfläche 3 Oberflächenteile der Abdeckscheibe 1 sind und gemeinsam die Gesamtoberfläche der Abdeckscheibe 3 bilden. Bevorzugt wird die Abdeckscheibe 1 in einem Spritzgussverfahren hergestellt. Dieses Spritzgussverfahren wird später beschrieben.

Die Beschichtung 6 besteht aus PU Polyurethan oder weist zumindest PU Polyurethan auf. Dabei ist die Beschichtung 6 bevorzugt transparent ausgebildet. Die Beschichtung 6 kann anhand eines Niederdruck Spritzguss Verfahrens, wie dem Reaction Injection Molding aufgebracht werden. Der Vorteil einer solchen Beschichtung 6 aus PU Polyurethan liegt insbesondere darin, mechanische Deformationen z.B. Kratzspuren durch Wärmeeintrag in die Beschichtung 6 wieder glätten zu können. Ein solcher Wärmeeintrag kann bereits durch die Umgebungswärme in ausreichender Menge vorhanden sein. Insbesondere kann auftreffendes Sonnenlicht auf die Beschichtung 6 für einen entsprechenden Wärmeeintrag sorgen. Auch ist es denkbar, dass z.B. eine Lichtquelle für den notwendigen Wärmeeintrag an der Beschichtung 6 der Abdeckscheibe 1 sorgt. Beispielsweise kann sich entsprechend beschichtetes zerkratztes Material innerhalb von Sekunden bei 60°C wieder spannen und so bestehende Kratzspuren beheben.

Wie ersichtlich ist die Außenfläche 3 ausschließlich an der Beschichtung 6 und am opaken Körper 5 gebildet. Damit ist gemeint, dass jener Oberflächenteil der Abdeckscheibe 1, welcher im zweckmäßigen Einsatz äußere Einflüssen ausgesetzt sein kann, ausschließlich durch die Beschichtung 6 und den opaken Körper 5 gebildet ist. Wesentlich ist, dass die Außenfläche 3 nicht am transparenten Körper 4 gebildet ist. Der transparente Körper 4 kann beispielsweise aus PC Polycarbonat oder PMMA Polymethylmethacrylat bestehen oder zumindest diese Materialen aufweisen. Diese Materialen zeichnen sich durch einen hohen Transmissionsgrad für Licht im sichtbaren Bereich aus und sind daher besonders für den Einsatz in Kraftfahrzeugleuchten 8 geeignet. Jedoch sind diese Materialien anfällig gegenüber zumindest einen Teil der oben genannten äußeren Einflüsse und benötigen daher eine entsprechende Beschichtung 6, welche gegen einen, mehrere oder alle der oben genannten Einflüsse beständig ist. Der transparente Körper 4 kann auch eingefärbt sein. Beispielsweise kann der transparente Körper 4 rot eingefärbt sein.

Der opake Körper 5 kann aus einem Material bestehen oder zumindest ein Material aufweisen, welches zumindest gegenüber eine, mehrere oder alle der oben genannten äußeren Einflüsse beständig ist. Bevorzugt ist der opake Körper 5 zumindest gegenüber dem Einfluss von Chemikalien beständig. Beispielsweise kommt ein thermoplastisches Terpolymer, bevorzugt ABS Acrylnitril-Butadien-Styrol als mögliches Material für den opaken Körper 5 in Frage. Der opake Körper 5 kann also aus ABS Acrylnitril-Butadien-Styrol bestehen oder zumindest dieses Material aufweisen. Beispielsweise kann der opake Körper 5 aus einer Kombination von PC Polycarbonat und ABS Acrylnitril-Butadien-Styrol bestehen. Der opake Körper 5 kann also einen geringeren Transmissionsgrad für Licht aufweisen als der transparente Körper 4. Als "opak" sei demnach nicht zwingend ein gänzlich lichtundurchlässiges Material zu verstehen. Weiters kann der opake Körper 5 auch eingefärbt sein.

Es ist möglich, dass an den opaken Körper 5 geringere Anforderungen bezüglich der Beständigkeit gegenüber äußeren Einflüssen gestellt sind, da bestimmte Beständigkeiten anderweitig sichergestellt sind. Beispielsweise kann durch den zweckmäßigen Einsatz der Abdeckscheibe 1 in einer Kraftfahrzeugleuchte 8 der opake Körper 5 derart durch Schutzelemente, wie die Motorhaube, Verdeckelemente, Blenden oder einer Stoßstange vor bestimmten äußeren Einflüssen geschützt sein. Beispielsweise sind derartige Schutzelemente dazu eingerichtet den opaken Körper 5 der Abdeckscheibe 1 an der Außenfläche 3 vor äußeren Einflüssen wie Sonneneinstrahlung und der damit einhergehenden UV Belastung, sowie vor äußeren mechanischen Einwirkungen zu schützen. In einem solchen zweckmäßigen Einsatz der Abdeckscheibe 1 und in Verbindung mit genannten Schutzelementen kann also für jenen Bereich der Außenfläche 3, der durch den opaken Körper 5 gebildet ist, ein Teil der Beständigkeiten gegenüber äußeren Einflüssen entfallen.

Diese Beschichtung 6 bedeckt, gesehen von der Außenfläche 3 in Richtung Innenfläche 2, den transparenten Körper 4 zur Gänze. Der opake Körper 5 ist, gesehen von der Außenfläche 3 in Richtung Innenfläche 2, lediglich teilweise von der Beschichtung 6 bedeckt. Der den transparenten Körper 4 zur Gänze bedeckende Bereich der Beschichtung 6 bildet einen Nutzabschnitt 6a, welcher Nutzabschnitt 6a also Teil der Beschichtung 6 ist. Wenngleich lediglich ein einzelner Nutzabschnitt 6a gezeigt ist, sind mehrere Nutzabschnitte denkbar. Insbesondere bei einer Ausgestaltung mit einem entsprechend ausgelegten opaken Körper 5 können mehrere transparente Fenster gebildet werden, womit gegebenenfalls mehrere Nutzabschnitte vorliegen. Hingegen bildet der den opaken Körper 5 lediglich teilweise bedeckende Bereich der Beschichtung 6, wiederum gesehen von der Außenfläche 3 in Richtung Innenfläche 2, Teilabschnitte 6b, 6c, 6d der Beschichtung 6. Der den opaken Körper 5 lediglich teilweise bedeckte Bereich der Beschichtung 6 bildet also zumindest einen ersten Teilabschnitt 6b. Dieser erste Teilabschnitt 6b ist in einer Überlaufkavität 31 im Einspritzprozess der Beschichtung 6 geformt.

Ein zweiter Teilabschnitt 6c der Beschichtung 6, welcher den opaken Körper 6 teilweise bedeckt, kann dabei in einer Angusskavität im Einspritzprozess der Beschichtung 6 geformt worden sein. Ein dritter Teilabschnitt 6d der Beschichtung 6, welcher den opaken Körper 6 teilweise bedeckt, kann dabei in einer weiteren Überlaufkavität im Einspritzprozess der Beschichtung 6 geformt worden sein. Der Einspritzprozess umfasst das Spritzgießen der Beschichtung 6 in einer Flutkavität 30, welche Flutkavität 30 zumindest eine Überlaufkavität 31 aufweist.

Die Oberflächenbeschaffenheit des ersten Teilabschnitts 6b bzw. aller Teilabschnitte 6b, 6c, 6d kann sich von der Oberflächenbeschaffenheit des Nutzabschnitts 6a unterscheiden. Beispielsweise kann die, während des Einspritzprozesses des Beschichtungsmaterials, in die Überlaufkavität 31 verdrängte Luft zu Meniskusausbildungen (gezeigt in Fig. 1) entlang des Randbereichs des ersten Teilabschnitts 6b und des dritten Teilabschnitts 6d führen. Der zweite Teilabschnitt 6c, welcher in der Angusskavität im Einspritzprozess der Beschichtung 6 geformt ist, kann im Vergleich zum Nutzabschnitt 6a aufgrund des Angusspunktes einen Unterschied in der Oberflächenbeschaffenheit aufweisen. Der erste Teilabschnitt 6b bzw. alle Teilabschnitte 6b, 6c, 6d sind aber, da sie den opaken Körper 5 teilweise bedecken, für einen Betrachter in der Richtung gesehen von der Außenfläche 3 zur Innenfläche 2 nicht oder nur kaum wahrnehmbar.

Wenngleich nur eine begrenzte Anzahl an Teilabschnitten 6b, 6c, 6d gezeigt ist, können beliebig viele Teilabschnitte vorgesehen sein. Abhängig von der Geometrie und Form der Abdeckscheibe 1, also abhängig von der Geometrie und Form des transparenten Körpers 5 und des opaken Körpers 5 sind daher weitere Teilabschnitte denkbar. Alle Teilabschnitte 6b, 6c, 6d können über den Nutzabschnitt 6a miteinander verbunden sein. Diese Teilabschnitte 6b, 6c, 6d sind also nicht direkt miteinander verbunden. Der Nutzabschnitt 6a und die Teilabschnitte 6b, 6c, 6d bilden gemeinsam die Beschichtung 6.

Gesehen von der Außenfläche 3 in Richtung Innenfläche 2 weist die Beschichtung 6 eine bestimmte Dicke auf. Diese Dicke kann zwischen 0,1 mm und 0,9 mm betragen. Bevorzugt ist die Dicke des Nutzabschnitts 6a der Beschichtung 6 an allen Stellen der Beschichtung 6 gleich.

Ebenso weist der erste Teilabschnitt 6b der Beschichtung 6 eine Dicke auf, welche kleiner gleich, bevorzugt aber gleich der Dicke des Nutzabschnitts 6a ist und daher ebenso zwischen 0,1 mm und 0,9 mm betragen kann. Selbiges kann für den zweiten Teilabschnitt 6c und/oder den dritten Teilabschnitt 6d der Beschichtung 6 bzw. für alle weiteren Teilabschnitte gelten.

Der gezeigte zweite Teilabschnitt 6c der Beschichtung 6, welcher getrennt von dem ersten Teilabschnitt 6b in einer Angusskavität im Einspritzprozess der Beschichtung 6 geformt ist, ist bevorzugt entlang der Außenfläche 3 an einem gegenüberliegenden Bereich der Beschichtung 6 gebildet. Damit wird eine verbesserte Oberflächenbeschaffenheit der Beschichtung 6, insbesondere des Nutzabschnitts 6a der Beschichtung 6 erreicht.

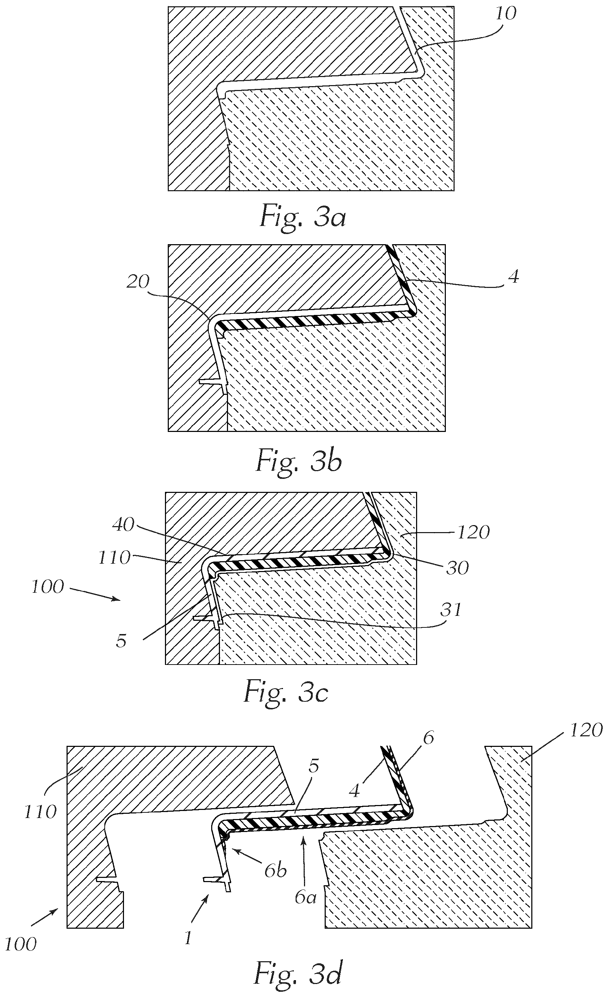

Im Folgenden wird ein beispielhaftes Spritzgussverfahren anhand der Fig. 3a bis Fig. 3d genauer erklärt. Dabei zeigen die Figuren der besseren Übersicht halber nur jenen Ausschnitt der Abdeckscheibe 1, welcher strichliert in Fig. 2 dargestellt ist.

Das Spritzgussverfahren umfasst mehrere Schritte, deren zeitliche Abfolge nicht zwingend in der nun beschriebenen Reihenfolge ablaufen muss. Sofern logisch anwendbar können die Schritte auch in einer anderen Reihenfolge ablaufen.

In einem Schritt, siehe Fig. 3a, wird ein Spritzgusswerkzeug zur Formung einer ersten Kavität 10 bereitgestellt. Eine Kavität bezeichnet einen weitestgehend geschlossenen Hohlraum in welchen Spritzgussmaterial eingespritzt werden kann. Die erforderliche Dichtheit der Kavität 10 ist dabei vom einzuspritzenden Material abhängig. Beispielsweise erlauben thermoplastische Kunststoffe wie PC Polycarbonat, PMMA Polymethylmethacrylat oder ABS Acrylnitril-Butadien-Styrol aufgrund ihrer vergleichsweise hohen Viskosität eine geringere Dichtheit der Kavität an den Randbereichen, wodurch beispielsweise eine Werkzeugentlüftung realisiert werden kann.

Die erste Kavität 10 wird mit einem entsprechenden Spritzgussmaterial gefüllt, um so einen transparenten Körper 4 zu erzeugen. Demnach bestimmt die erste Kavität 10 die Form des transparenten Körpers 4, welcher durch Spritzgießen in der ersten Kavität 10 und nach dem Aushärten des eingespritzten Spritzgussmaterials entsteht. Mögliche Materialien für den transparenten Körper 4 wurden bereits erwähnt.

In einem weiteren Schritt, siehe Fig. 3b, wird ein Spritzgusswerkzeug zur Formung einer zweiten Kavität 20 bereitgestellt. Die zweite Kavität 20 bestimmt die Form des opaken Körpers 5, welcher durch Spritzgießen in der zweiten Kavität 20 und nach dem Aushärten des eingespritzten Spritzgussmaterials entsteht. Mögliche Materialien für den opaken Körper 5 wurden bereits erwähnt.

In der gezeigten Anordnung wird die zweite Kavität 20 teilweise durch den transparenten Körper 4 begrenzt. Eine Ausformung des Spritzgussverfahrens in welcher zuerst der opake Körper 5 spritzgegossen wird und anschließend der transparente Körper 4 ist ebenso möglich. In diesem Fall würde der opake Körper 5 teilweise die erste Kavität 10 begrenzen. Wesentlich ist, dass der transparente Körper 4 und der opake Körper 5 während des Spritzgussverfahrens einstückig zusammenhängend miteinander verbunden werden.

In einem weiteren Schritt, siehe Fig. 3c, wird ein Spritzgusswerkzeug 100 zur Formung einer Flutkavität 30 bereitgestellt. Die Flutkavität 30 bestimmt die Form der Beschichtung 6, welche durch Spritzgießen in die Flutkavität 30 und nach dem Aushärten des eingespritzten Beschichtungsmaterials entsteht. Wenngleich hier der Begriff "spritzgießen" im Zusammenhang mit dem Beschichtungsmaterial, welches PU Polyurethan aufweist, verwendet wird, kann dieser Vorgang auch als "fluten" bezeichnet werden. Wie bereits erwähnt, kann das Beschichtungsmaterial durch ein Niederdruck Spritzguss Verfahren, wie dem Reaction Injection Molding in die Flutkavität 30 eingebracht werden. Die Flutkavität 30 wird teilweise von dem transparenten Körper 4 und teilweise von dem opaken Körper 5 begrenzt, so dass nach dem Spritzgießen der Beschichtung 6 in die Flutkavität 30 der transparente Körper 4, der opake Körper und die Beschichtung 6 einstückig zusammenhängend verbunden sind. Zusätzlich wird die Flutkavität 30 von der zweiten Werkzeughälfte 120 des Spritzgusswerkzeuges 100 begrenzt, wobei die erste Werkzeughälfte 110 des Spritzgusswerkzeuges 100 den opaken Körper 5, sowie den damit einstückig zusammenhängenden transparenten Körper 4 trägt. Der transparente Körper 4 und der damit einstückig zusammenhängende opake Körper 5 können gemeinsam als spritzgegossener Abdeckscheibenrohling 40 bezeichnet werden, welcher also von der ersten Werkzeughälfte 110 getragen wird bzw. von dieser aufnehmbar ist. Die Flutkavität 30 ist bevorzugt zumindest weitestgehend luftdicht abgeschlossen.

Zwischen der ersten Werkzeughälfte 110 und der zweiten Werkzeughälfte 120 ist also in geschlossener Form des Spritzgusswerkzeuges 100, wie gezeigt, eine Flutkavität 30 formbar, welche Flutkavität 30 teilweise von der zweiten Werkzeughälfte 120, teilweise von dem transparenten Körper 4 und teilweise von dem opaken Körper 5 des von der ersten Werkzeughälfte 110 aufnehmbaren Abdeckscheibenrohlings 40, begrenzt ist.

Der opake Körper 5 begrenzt teilweise eine Überlaufkavität 31. Diese Überlaufkavität 31 ist Teil der Flutkavität 30, womit jener Teil der Flutkavität 30, welcher lediglich von dem transparenten Körper 4 und der zweiten Werkzeughälfte 120 begrenzt ist, durch eben diese Überlaufkavität 31 erweitert wird. Die Überlaufkavität 31 wird daher, abgesehen von der Verbindung zur restlichen Kavität der Flutkavität 30, lediglich von dem opaken Körper 5 und von der zweiten Werkzeughälfte 120 begrenzt.

Damit weist die Flutkavität 30 zumindest eine Überlaufkavität 31 auf, welche Überlaufkavität 31 dazu eingerichtet ist, in der Flutkavität 30 befindliche Luft aufzunehmen, wenn diese durch Einspritzen von Beschichtungsmaterial in die Flutkavität 30 verdrängt und gegebenenfalls komprimiert wird.

Die Bereitstellung der Kavitäten 10, 20, 30 kann beispielsweise über bekannte Mehrkomponentenspritzgussverfahren realisiert werden. Nicht einschränkend kommen hier beispielsweise Wendeplatten- oder Drehplattenmechanismen in Frage.

Nun wird durch Einspritzen eines Beschichtungsmaterials in die Flutkavität 30 die Beschichtung 6 geformt. Die in der Flutkavität 30 befindliche Luft wird während des Einspritzvorgangs von dem Beschichtungsmaterial in die Überlaufkavität 31 verdrängt und dort gegebenenfalls komprimiert. Ein Teil der Überlaufkavität 31 wird mit dem Beschichtungsmaterial gefüllt. Dieser Teil wird in weiterer Folge den ersten Teilabschnitt 6b der Beschichtung 6 bilden. Mit Verweis auf Fig. 1 sei anzumerken, dass Projektionen der Grenzen der Überlaufkavitäten strichliert um den ersten Teilabschnitt 6b und den dritten Teilabschnitt 6d angedeutet sind.

Bevorzugt wird die Flutkavität 30 entgegen der Schwerkraft mit dem Beschichtungsmaterial gefüllt, um eine verbesserte Oberflächenbeschaffenheit der Beschichtung 6 zu erreichen. Zu diesem Zweck kann das bereitgestellte Spritzgusswerkzeug zur Formung der Flutkavität 30 entsprechend ausgelegt sein oder gedreht werden.

Das Spritzgusswerkzeug 100 weist zur Formung der Beschichtung 6 in der Flutkavität 30 zumindest einen Angusspunkt (nicht gezeigt) auf, von welchem ein Strömungspfad des Beschichtungsmaterials während des Spritzgießens des Beschichtungsmaterials ausgeht. Ein "Angusspunkt" kann auch als Angussbereich oder Angussfilm verstanden werden. Dieser Angusspunkt mündet bevorzugt in der genannten Angusskavität, in welcher der zweite Teilabschnitt 6c der Beschichtung 6 geformt werden kann. Eine verbesserte Oberflächenbeschaffenheit der Beschichtung 6, insbesondere des Nutzabschnitts 6a der Beschichtung 6, wird auch dadurch erreicht, dass die Überlaufkavität 31 in geschlossener Form der Werkzeughälften 110, 120 entgegen dieses Strömungspfades und bezogen auf den Angusspunkt im Wesentlichen an der am weitest entferntesten Stelle angeordnet ist. Ist nun das Spritzgusswerkzeug 100 zusätzlich so ausgelegt, dass die Flutkavität 30 entgegen der Schwerkraft mit dem Beschichtungsmaterial füllbar ist, so wird eine optimale Oberflächenbeschaffenheit der Beschichtung 6, insbesondere des Nutzabschnitts 6a erreicht.

Das Volumen der Überlaufkavität 31 hängt von Faktoren, wie Einspritzdruck, Beschichtungsmaterial und der Form der Beschichtung 6 ab. Das Volumen der Überlaufkavität 31 ist bevorzugt so gewählt, dass diese die gesamte in der Flutkavität 30 befindliche Luft im Einspritzprozess, gegebenenfalls in komprimierter Form, aufnehmen kann. Sind mehrere Überlaufkavitäten vorgesehen, so bezieht sich das mögliche Volumen auf das Gesamtvolumen aller Überlaufkavitäten.

In einem weiteren, bevorzugt letzten, Schritt, siehe Fig. 3d, wird die Abdeckscheibe 1 entformt. Zu diesem Zweck wird die erste Werkzeughälfte 110 und die zweite Werkzeughälfte 120 voneinander entfernt und die Abdeckscheibe 1 ausgeworfen. Die Abdeckscheibe 1 aufweisend den opaken Körper 5, den transparenten Körper 4 sowie die Beschichtung 6 kann bei Bedarf anschließend mit einem Gehäuse 7 verbunden, beispielsweise verklebt werden.

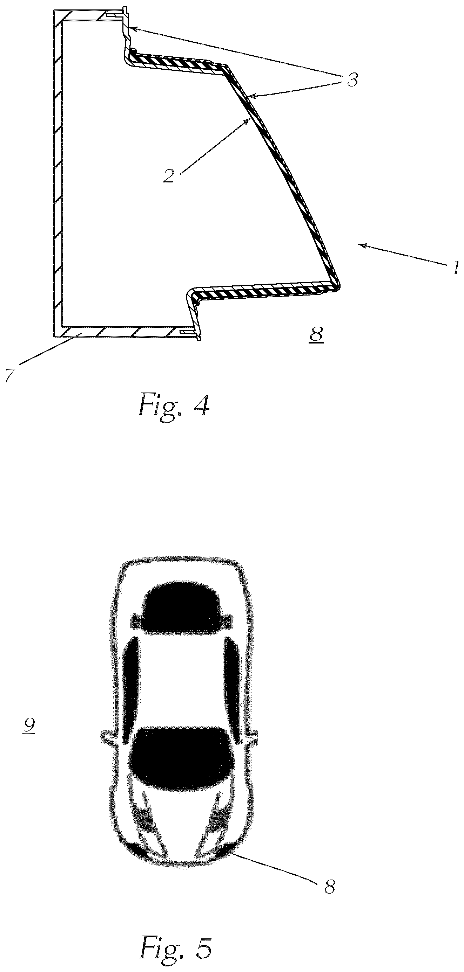

Fig. 4 zeigt die Abdeckscheibe 1 in einem zweckmäßigen Einsatz in einer Kraftfahrzeugleuchte 8, wobei die Abdeckscheibe 1 mit einem Gehäuse 7 verbunden ist, womit die Innenfläche 2 der Abdeckscheibe 1 vor einen, mehreren oder allen der genannten äußeren Einflüsse geschützt ist. Im Innenbereich der Kraftfahrzeugleuchte können Leuchtmodule, insbesondere LED-Leuchtmodule angeordnet sein.

Fig. 5 zeigt ein Kraftfahrzeug 9, in welchem eine solche Kraftfahrzeugleuchte 8 verbaut ist. Eine solche Kraftfahrzeugleuchte 8 kann beispielsweise eine Rückleuchte, Nebelleuchte, Signalleuchte oder Kühlergrillbeleuchtungseinrichtung sein.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Abdeckscheibe (1) für eine Kraftfahrzeugleuchte (8), wobei die Abdeckscheibe (1)
eine Innenfläche (2),
eine der Innenfläche (2) gegenüberliegende Außenfläche (3),
einen transparenten Körper (4),
einen opaken Körper (5) und
eine Beschichtung (6) aufweist, wobei die Beschichtung (6) PU Polyurethan aufweist,
**dadurch gekennzeichnet, dass**
der transparente Körper (4), der opake Körper (5) sowie die Beschichtung (6) derart einstückig zusammenhängend, bevorzugt in einem Spritzgussverfahren hergestellt, sind, dass
die Außenfläche (3) ausschließlich an der Beschichtung (6) und am opaken Körper (5) gebildet ist,
wobei die Beschichtung (6) gesehen von der Außenfläche (3) in Richtung Innenfläche (2) den transparenten Körper (4) zur Gänze und den opaken Körper (5) lediglich teilweise bedeckt,
wobei der den transparenten Körper (4) zur Gänze bedeckende Bereich der Beschichtung (6) einen Nutzabschnitt (6a) der Beschichtung bildet und wobei der lediglich teilweise den opaken Körper (5) bedeckende Bereich der Beschichtung (6) zumindest einen ersten Teilabschnitt (6b) der Beschichtung (6) bildet, welcher erste Teilabschnitt (6b) zumindest teilweise in einer Überlaufkavität (31) im Einspritzprozess der Beschichtung (6) geformt ist.

2. Abdeckscheibe (1) nach Anspruch 1, wobei der Nutzabschnitt (6a) der Beschichtung (6) gesehen von der Außenfläche (3) in Richtung Innenfläche (2) eine Dicke zwischen 0,1 mm und 0,9 mm aufweist.

3. Abdeckscheibe (1) nach einem der vorhergehenden Ansprüche, wobei der erste Teilabschnitt (6b) der Beschichtung (6) eine Dicke aufweist, welche kleiner gleich, bevorzugt gleich der Dicke des Nutzabschnitts (6a) der Beschichtung (6) ist.

4. Abdeckscheibe (1) nach einem der vorhergehenden Ansprüche, wobei der lediglich teilweise den opaken Körper (5) bedeckende Bereich der Beschichtung (6) zusätzlich einen zweiten Teilabschnitt (6c) bildet, welcher zweite Teilabschnitt (6c) getrennt von dem ersten Teilabschnitt (6b) in einer Angusskavität im Einspritzprozess der Beschichtung (6) geformt ist.

5. Abdeckscheibe (1) nach Anspruch 4, wobei der zweite Teilabschnitt (6c) entlang der Außenfläche (3) im Wesentlichen an einem gegenüberliegenden Bereich der Beschichtung (6) gebildet ist.

6. Abdeckscheibe (1) nach einem der vorhergehenden Ansprüche, wobei der opake Körper (5) ein Material aufweist, welches zumindest gegenüber einem äußeren Einfluss, gewählt aus einer Gruppe von äußeren Einflüssen, welche Gruppe Einflüsse durch widrige Witterungsverhältnisse, mechanische Einflüsse, Einflüsse durch Sonneneinstrahlung oder Einflüsse von Chemikalien umfasst, beständig ist.

7. Spritzgussverfahren zur Erzeugung einer Abdeckscheibe (1) für eine Kraftfahrzeugleuchte, wobei das Spritzgussverfahren folgende Schritte umfasst:
• Bereitstellen eines Spritzgusswerkzeuges zur Formung einer ersten Kavität (10),
• Spritzgießen eines transparenten Körpers (4) in der ersten Kavität (10),
• Bereitstellen eines Spritzgusswerkezeuges zur Formung einer zweiten Kavität (20),
• Spritzgießen eines opaken Körpers (5) in der zweiten Kavität (20),
wobei entweder die erste Kavität (10) derart teilweise durch den opaken Körper (5) begrenzt wird oder die zweite Kavität (20) derart teilweise durch den transparenten Körper (4) begrenzt wird, dass der transparente Körper (4) und der opake Körper (5) während des Spritzgießens miteinander einstückig zusammenhängend verbunden werden,
• Bereitstellen eines Spritzgusswerkzeuges zur Formung einer Flutkavität (30), welche Flutkavität (30) teilweise von dem transparenten Körper (4) und teilweise von dem opaken Körper (5) begrenzt wird,
wobei der opake Körper (5) teilweise zumindest eine Überlaufkavität (31) begrenzt, welche zumindest eine Überlaufkavität (31) Teil der Flutkavität (30) ist,
• Spritzgießen einer Beschichtung (6) in der Flutkavität (30) durch Einspritzen eines Beschichtungsmaterials in die Flutkavität (30), wobei das Beschichtungsmaterial PU Polyurethan enthält,
wobei während des Einspritzprozesses in die Flutkavität (30) Luft, welche sich in der Flutkavität (30) befindet, von dem Beschichtungsmaterial in die zumindest eine Überlaufkavität (31) verdrängt wird,
• Entformen der Abdeckscheibe (1).

8. Spritzgussverfahren nach Anspruch 7, wobei während des Spritzgießens des Beschichtungsmaterials in die Flutkavität (30) die Flutkavität (30) entgegen der Schwerkraft mit dem Beschichtungsmaterial gefüllt wird.

9. Spritzgussverfahren nach einem der Ansprüche 7 bis 8, wobei der opake Körper (5) aus einem Material spritzgegossen wird bzw. ein Material aufweist, welches zumindest gegenüber einem äußeren Einfluss, gewählt aus einer Gruppe von äußeren Einflüssen, welche Gruppe Einflüsse durch widrige Witterungsverhältnisse, mechanische Einflüsse, Einflüsse durch Sonneneinstrahlung oder Einflüsse von Chemikalien umfasst, beständig ist.

10. Spritzgusswerkzeug (100) zur Erzeugung einer Abdeckscheibe (1) für eine Kraftfahrzeugleuchte, wobei das Spritzgusswerkzeug (100)
eine erste Werkzeughälfte (110) und eine zweite Werkzeughälfte (120) aufweist,
wobei die erste Werkzeughälfte (110) dazu eingerichtet ist, einen spritzgegossenen Abdeckscheibenrohling (40) aufzunehmen, welcher Abdeckscheibenrohling (40) einen transparenten Körper (4) und einen damit einstückig zusammenhängenden opaken Körper (5) aufweist,
wobei zwischen der ersten Werkzeughälfte (110) und der zweiten Werkzeughälfte (120) in geschlossener Form eine Flutkavität (30) formbar ist, welche Flutkavität (30) teilweise von der zweiten Werkzeughälfte (120), teilweise von dem transparenten Körper (4) und teilweise von dem opaken Körper (5), des von der ersten Werkzeughälfte (110) aufnehmbaren Abdeckscheibenrohlings (40), begrenzt ist,
wobei die Flutkavität (30) zumindest eine Überlaufkavität (31) aufweist, welche Überlaufkavität (31) dazu eingerichtet ist, in der Flutkavität (30) befindliche Luft aufzunehmen, wenn diese durch Einspritzen von Beschichtungsmaterial in die Flutkavität (30) verdrängt wird,
wobei die zumindest eine Überlaufkavität (31) teilweise von der zweiten Werkzeughälfte (120) und teilweise von dem opaken Körper (5), des von der ersten Werkzeughälfte (110) aufnehmbaren Abdeckscheibenrohlings (40), begrenzt ist.

11. Spritzgusswerkzeug (100) nach Anspruch 10, wobei die zumindest eine Überlaufkavität (31) in geschlossener Form der Werkzeughälften (110, 120) entgegen eines Strömungspfades des Beschichtungsmaterials beim Einspritzen und bezogen auf einen Angusspunkt des Beschichtungsmaterials, von welchem der Strömungspfad ausgeht, im Wesentlichen an der am weitest entferntesten Stelle angeordnet ist.

12. Kraftfahrzeugleuchte (8) mit einer Abdeckscheibe (1) nach einem der Ansprüche 1 bis 6 oder mit einer Abdeckscheibe (1) erzeugt durch das Spritzgussverfahren nach einem der Ansprüche 7 bis 9.

13. Kraftfahrzeug (9) mit einer Kraftfahrzeugleuchte (8) nach Anspruch 12.
